(19) Europäisches Patentamt / European Patent Office / Office européen des brevets

(11) **EP 4 333 367 A1**

(12) **DEMANDE DE BREVET EUROPEEN**

(43) Date de publication:
**06.03.2024 Bulletin 2024/10**

(21) Numéro de dépôt: **23194109.7**

(22) Date de dépôt: **29.08.2023**

(51) Classification Internationale des Brevets (IPC):
**H04L 9/32** (2006.01)     **H04L 9/00** (2022.01)

(52) Classification Coopérative des Brevets (CPC):
**H04L 9/3234; H04L 9/008;** H04L 9/3231;
H04L 63/0861; H04L 2209/046

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **05.09.2022 FR 2208881**

(71) Demandeur: **Commissariat à l'énergie atomique et aux énergies alternatives 75015 Paris (FR)**

(72) Inventeurs:
• **SIRDEY, Renaud**
  **91191 Gif-sur-Yvette (FR)**
• **BOUDGUIGA, Aymen**
  **91191 Gif-sur-Yvette (FR)**
• **ZUBER, Martin**
  **91191 Gif-sur-Yvette (FR)**

(74) Mandataire: **Brevalex**
  **Tour Trinity**
  **1 B Place de la Défense**
  **92400 Courbevoie (FR)**

(54) **MÉTHODE DE CONTRÔLE D'ACCÈS À AUTHENTIFICATION CONDITIONNÉE**

(57) La présente invention concerne une méthode de contrôle d'accès d'un utilisateur équipé d'un terminal (UE) à une ressource physique ou logique, ladite méthode faisant intervenir un dispositif cryptographique sécurisé (HSM) formant un jeton correspondant à un critère d'accès, le jeton d'accès servant à générer un flux de clé masquant une référence biométrique de l'utilisateur obtenue par un lecteur biométrique (REC$_1$) du terminal. La référence biométrique ainsi masquée est chiffrée par chiffrement totalement homomorphe (FHE) et stockée dans une base de données (DB) hébergée par un serveur distant (SV). Un opérateur de contrôle d'accès (SO) obtient une caractéristique biométrique de l'utilisateur, la chiffre en homomorphe et la transmet au serveur distant. Ce serveur compare les premier et second modèles biométriques dans le domaine homomorphe et fournit le résultat de la comparaison chiffré en homomorphe à l'opérateur de contrôle d'accès. Ce dernier autorise ou refuse l'accès à l'utilisateur en fonction du résultat de la comparaison, après l'avoir déchiffré.

FIG. 1

EP 4 333 367 A1

## Description

### Domaine technique

La présente invention concerne de manière générale le domaine du contrôle d'accès, que ce soit un accès physique ou un accès logique.

### Etat de la technique antérieure

Le contrôle d'accès concerne les différentes techniques permettant de sécuriser et gérer l'accès à un lieu, un service ou de manière générale à une ressource logique ou physique. De nombreuses techniques de contrôle d'accès sont connues de l'état de la technique. Par exemple, lorsqu'il s'agit d'un accès à un lieu, le contrôle d'accès peut être réalisé par une serrure électronique, un lecteur de badge, un lecteur biométrique tel qu'un capteur d'empreintes, un système reconnaissance faciale ou vocal. Lorsqu'il s'agit d'un accès à un système d'information ou bien à une ressource logique telle qu'un service en ligne, un système d'information, le contrôle d'accès peut être réalisé par la lecture d'un code PIN, d'un mot de passe, la génération et la fourniture d'un code à usage unique, la réponse à un défi, etc. Dans la suite nous considérerons les méthodes de contrôle d'accès faisant appel à une authentification de l'utilisateur, notamment une authentification biométrique.

Dans certains cas particuliers, l'accès n'est donné à l'utilisateur que dans la mesure où une certaine condition est réalisée. Par exemple cette condition peut être la survenance d'un terme, l'appartenance d'un temps à une plage horaire, la position à un certain endroit ou dans une certaine zone géographique.

Par exemple, il est connu de chiffrer un message et de ne permettre son déchiffrement par un tiers que lorsqu'un certain terme est échu. On pourra trouver une description de cette méthode d'accès conditionnée temporellement dans l'article de J. Liu et al. intitulé « How to build time-lock encryption » Des. Codes Cryptogr., vol. 86, pp. 2549-2586, (2018). Toutefois, cette technique est basée sur une chaîne de blocs utilisant un mécanisme de consensus de type preuve de travail (PoW) ne permet pas une résolution temporelle inférieure à l'intervalle séparant deux blocs successifs. En outre, elle n'est pas généralisable à d'autres types de condition d'accès, par exemple à un instant d'accès devant appartenir à une fenêtre temporelle prédéterminée ou bien encore à une position de l'utilisateur devant appartenir à une zone géographique prédéterminée.

Le but de la présente invention est de proposer une méthode de contrôle d'accès conditionné, faisant appel à une authentification de l'utilisateur et qui puisse s'adapter simplement à différents types de condition et ne nécessite pas de recourir à une chaîne de blocs.

### Présentation de l'invention

La présente invention est définie par une méthode de contrôle d'accès d'un utilisateur à une ressource physique ou logique, ledit utilisateur étant équipé d'un terminal (UE) muni d'un premier dispositif d'authentification (REC$_1$), ladite méthode de contrôle d'accès comprenant une phase d'enregistrement auprès d'un fournisseur de service (SP) et une phase de vérification auprès d'un opérateur de contrôle d'accès, ladite méthode étant originale en ce que, dans la première phase :

- un module cryptographique sécurisé (HSM) génère un jeton d'accès à partir d'un critère d'accès défini par le fournisseur de service puis génère un flux de clé ($ks_i$) au moyen d'un chiffrement par flot, à partir du jeton d'accès et d'un vecteur d'initialisation ($IV_i$), ledit flux de clé étant transmis au terminal ;
- le terminal obtient une référence d'authentification *(tp)* de l'utilisateur au moyen du premier dispositif d'authentification, masque cette référence d'authentification au moyen du flux de clé et la transmet à une unité de chiffrement homomorphe, pour obtenir une référence d'authentification masquée et chiffrée ($[tp \oplus ks_i]_{FHE}$) au moyen d'une clé publique d'un cryptosystème homomorphe, la référence d'authentification masquée et chiffrée étant transmise à un serveur distant (SV) pour être stockée dans une base de données (DB) ;

et que, dans la seconde phase :

- l'opérateur de contrôle d'accès transmet le jeton d'accès au dispositif cryptographique sécurisé, celui-ci générant à nouveau le flux de clé si le critère d'accès est satisfait et le transmettant alors au serveur distant ;
- l'opérateur de contrôle d'accès obtient une caractéristique d'authentification (c) de l'utilisateur au moyen d'un second dispositif d'authentification (REC$_2$), chiffre cette caractéristique d'authentification au moyen de la clé publique dudit cryptosystème homomorphe et transmet au serveur distant la caractéristique d'authentification ainsi chiffrée ($[c]_{FHE}$);
- le serveur distant somme la référence d'authentification chiffrée de l'utilisateur avec le flux de clé de manière à obtenir la référence d'authentification de l'utilisateur chiffrée en homomorphe ;
- le serveur distant effectue une comparaison de la caractéristique d'authentification et de la référence d'authentification dans le domaine homomorphe et transmet à l'opérateur de contrôle d'accès le résultat de la comparaison obtenu dans le domaine homomorphe ($[r]_{FHE}$);
- l'opérateur de contrôle d'accès déchiffre le résultat de la comparaison au moyen de la clé privée du cryptosytème homomorphe et accorde ou refuse l'accès à l'utilisateur en fonction du résultat ainsi déchiffré ($r$) .

Le jeton d'accès peut notamment être obtenu en agrégeant une pluralité de conditions d'accès définies par le fournisseur de service.

La pluralité de conditions d'accès comprend typiquement au moins une condition d'accès temporelle et une condition d'accès spatiale.

Avantageusement, le jeton d'accès est signé par le dispositif cryptographique sécurisé avant d'être transmis au terminal, ce dernier en vérifiant la provenance au moyen de la signature.

Le vecteur d'initialisation peut être incrémenté à chaque nouvelle phase d'enregistrement de l'utilisateur.

Avantageusement, le flux de clé généré par le dispositif cryptographique sécurisé est signé par le dispositif cryptographique sécurisé puis chiffré au moyen de la clé publique d'un cryptosystème de l'utilisateur, le terminal déchiffrant le flux de clé au moyen de la clé privée de ce cryptosystème et vérifiant la provenance du flux de clé au moyen de la signature.

Selon un exemple de réalisation, le terminal masque le premier modèle biométrique avec le flux de clé au moyen d'une opération XOR.

Les premier et second dispositif d'authentification peuvent être des lecteurs biométriques du même type, la référence d'authentification étant une référence biométrique et la caractéristique d'authentification étant une caractéristique biométrique.

La comparaison entre la caractéristique biométrique et la référence biométrique peut alors être basée sur la classification de cette caractéristique et de cette référence dans une pluralité de classes, la comparaison étant concluante si les classes dans lesquelles elles sont classées sont identiques.

La présent invention concerne également une méthode de contrôle d'accès d'un utilisateur à une ressource physique ou logique, ledit utilisateur étant équipé d'un terminal (UE) muni d'un premier dispositif d'authentification (REC$_1$), ladite méthode de contrôle d'accès comprenant une phase d'enregistrement auprès d'un fournisseur de service (SP) et une phase de vérification auprès d'un opérateur de contrôle d'accès, ladite méthode étant originale en ce que, dans la première phase :

- une pluralité de modules cryptographiques (HM$_1$, HM$_2$), chaque module cryptographique générant un jeton d'accès à partir d'un critère d'accès élémentaire défini par le fournisseur de service puis générant un flux de clé ( $ks_i^1, ks_i^2$ ) correspondant au moyen d'un chiffrement par flot, à partir du jeton d'accès associé au critère d'accès élémentaire et d'un vecteur d'initialisation ( $IV_i^1, IV_i^2$ ), ledit flux de clé étant transmis au terminal ;
- le terminal obtient une référence d'authentification *(tp)* de l'utilisateur au moyen du premier dispositif d'authentification, masque cette référence d'authentification au moyen des flux de clé, transmet la référence d'authentification ainsi masquée à une unité de chiffrement homomorphe, pour obtenir une référence d'authentification masquée et chiffrée ($[tp \oplus ks_i]_{FHE}$) au moyen d'une clé publique d'un cryptosystème homomorphe, la référence d'authentification masquée et chiffrée étant transmise à un serveur distant (SV) pour être stocké dans une base de données (DB) ;

et que, dans la seconde phase :

- l'opérateur de contrôle d'accès transmet les jetons d'accès aux modules cryptographiques qui les ont générés, chaque opérateur générant à nouveau le flux de clé si le critère d'accès élémentaire associé est satisfait et le transmettant alors au serveur distant ;
- l'opérateur de contrôle d'accès obtient une caractéristique d'authentification ( *c* ) de l'utilisateur au moyen d'un second dispositif d'authentification (REC$_2$), chiffre la caractéristique d'authentification au moyen de la clé publique dudit cryptosystème homomorphe et transmet au serveur distant la caractéristique d'authentification ainsi chiffrée ($[c]_{FHE}$);
- le serveur distant somme successivement la référence d'authentification masquée et chiffrée de l'utilisateur avec les flux de clé de ladite pluralité de manière à obtenir la référence d'authentification de l'utilisateur chiffrée en homomorphe ;
- le serveur distant effectue une comparaison de la caractéristique d'authentification et de la référence d'authentification dans le domaine homomorphe et transmet à l'opérateur de contrôle d'accès le résultat de la comparaison obtenu dans le domaine homomorphe ($[r]_{FHE}$);

- l'opérateur de contrôle d'accès déchiffre le résultat de la comparaison au moyen de la clé privée du cryptosystème homomorphe et accorde ou refuse l'accès à l'utilisateur en fonction du résultat ainsi déchiffré ($r$) .

## Brève description des figures

D'autres caractéristiques et avantages de l'invention apparaîtront à la lecture d'un mode de réalisation préférentiel de l'invention, fait en référence aux figures jointes parmi lesquelles :

[Fig. 1] représente de manière schématique une phase d'enregistrement d'une méthode de contrôle d'accès à authentification conditionnée, selon un premier mode de réalisation de l'invention ;
[Fig. 2] représente de manière schématique une phase de vérification d'une méthode de contrôle d'accès à authentification conditionnée, selon un premier mode de réalisation de l'invention ;
[Fig. 3] représente de manière schématique une phase d'enregistrement d'une méthode de contrôle d'accès à authentification conditionnée, selon un second mode de réalisation de l'invention ;
[Fig. 4] représente de manière schématique une phase de vérification d'une méthode de contrôle d'accès à authentification conditionnée, selon un second mode de réalisation de l'invention.

## Description des modes de réalisation

Nous considérerons dans la suite le contexte de mise en oeuvre de la méthode de contrôle d'accès, physique ou logique, conditionné par la réalisation d'un critère d'accès. Le critère d'accès (ou condition d'accès) pourra être, comme mentionné précédemment de type temporel, par exemple la survenance d'un terme déterminé ou l'appartenance à une fenêtre temporelle de l'instant où la requête d'accès est transmise par l'utilisateur à l'opérateur du contrôle d'accès. Alternativement, le critère d'accès pourra être de type spatial, par exemple la localisation de l'utilisateur dans une zone géographique donnée (pays par exemple), voire un lieu donné (entrée d'un espace protégé). Enfin, le critère d'accès pourra être la combinaison d'un critère temporel et d'un critère spatial.

La méthode de contrôle d'accès met en jeu une pluralité d'entités :

- un utilisateur équipé d'un terminal (mobile ou non), désigné par UE (*User Equipment*). Le terminal est équipé d'un dispositif d'acquisition d'une référence d'authentification, par exemple d'un lecteur biométrique destiné obtenir une référence biométrique (*template*) de l'utilisateur;
- un fournisseur de service désigné par SP (*Service Provider*) définissant le critère d'accès à une ressource logique ou physique pour l'utilisateur en question ;
- un opérateur de contrôle d'accès ou SO (*Service Operator*) vérifiant si la requête d'accès de l'utilisateur remplit ou non le critère d'accès et accordant ou refusant en conséquence à l'utilisateur l'accès à la ressource en question. Il joue à ce titre le rôle de délégataire du fournisseur de service. L'opérateur de contrôle d'accès est avantageusement équipé d'un dispositif d'acquisition d'une caractéristique d'authentification, par exemple d'un lecteur biométrique, du même type que celui embarqué dans le terminal UE ;
- un dispositif cryptographique sécurisé désigné par HSM (*Hardware Security Module*) ou BNT (Boite Noire Transactionnelle) capable de générer, stocker et protéger des clefs cryptographiques. Dans une variante de réalisation, le dispositif cryptographique sécurisé peut faire partie du fournisseur de service SP;

  - une unité de chiffrement homomorphe, ES, adaptée à effectuer un chiffrement au moyen de la clé publique d'un cryptosystème homomorphe comme décrit plus loin. Cette unité de chiffrement homomorphe peut être indépendante ou bien faire partie du fournisseur de service ;
  - un serveur distant, SV, hébergeant une base de données, DB (DataBase), dans laquelle sont stockées de manière confidentielle des références d'authentification, par exemple des références biométriques, de différents utilisateurs.

Pour illustrer le contexte par un cas concret, le fournisseur de service peut être une compagnie aérienne ou ferroviaire, l'organisateur d'un spectacle, l'opérateur de contrôle d'accès est un dispositif qui vérifie si l'utilisateur peut monter à bord du train/de l'avion ou entrer dans la salle de spectacle. Le terminal UE peut être un smartphone et le lecteur biométrique embarqué une caméra couplée à un logiciel capable d'extraire un modèle facial représentant des caractéristiques du visage de l'utilisateur. De manière similaire, l'opérateur de contrôle d'accès est équipé d'une caméra et d'un logiciel de reconnaissance faciale capable de comparer les caractéristiques d'une image prise par cette caméra et de les comparer à un modèle facial présent dans la base de données DB.

Dans tous les cas, le contrôle d'accès de l'utilisateur fait appel à une authentification de ce dernier. L'idée à la base de la présente invention est de ne permettre cette authentification que lorsque la condition est réalisée, cette activation de l'authentification étant réalisée au moyen d'une opération de déchiffrement dans le domaine homomorphe.

Plus précisément, la méthode de contrôle d'accès comprend deux phases distinctes : une première phase (*enrolment phase*) pendant laquelle l'utilisateur s'enregistre auprès du fournisseur de service SP et une seconde phase (*access phase*) pendant laquelle l'utilisateur requiert un accès, l'opérateur vérifiant alors, de manière confidentielle, si le critère d'accès est bien rempli pour lui accorder ou lui refuser cet accès à la ressource.

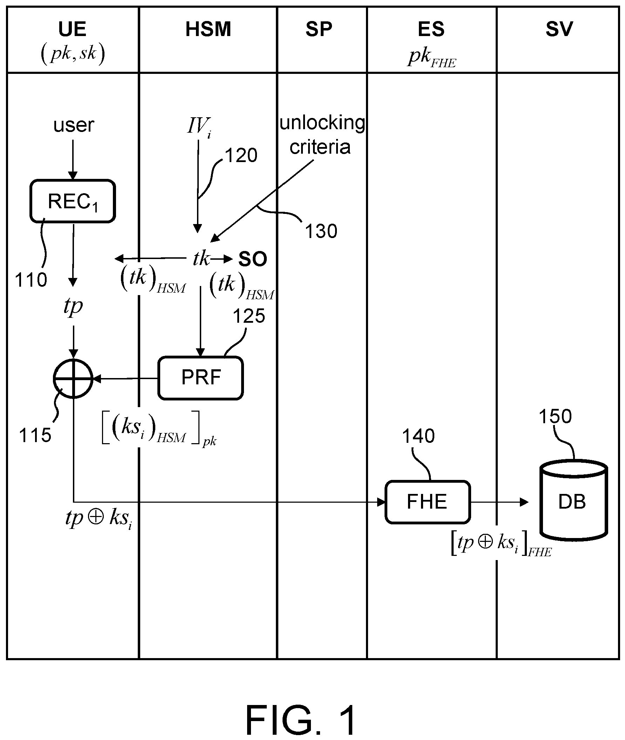

La Fig. 1 représente de manière schématique une phase d'enregistrement (*enrolment*) d'une méthode de contrôle d'accès à authentification conditionnée, selon un premier mode de réalisation de l'invention.

L'utilisateur dispose d'un cryptosystème asymétrique constitué par un couple (*pk, sk*) où *sk* est la clé privée et *pk* la clé publique correspondante.

Le terminal UE génère à l'étape 110, par exemple au moyen du lecteur biométrique embarqué, une référence d'authentification *tp,* par exemple une référence biométrique sous la forme d'un modèle facial, d'un modèle vocal, d'un modèle d'empreintes (minuties), permettant d'authentifier l'utilisateur de manière univoque.

Le module cryptographique sécurisé HSM reçoit par ailleurs en 130 du fournisseur de service un critère d'accès (*unlocking criteria*)*,* ce critère peut être composé d'une ou de plusieurs conditions d'accès. Par exemple, une condition d'accès peut être de nature temporelle (date, heure, plage horaire), spatiale (coordonnées GPS d'un lieu ou de points définissant le périmètre d'une zone) ou autre (connaissance d'un code PIN ou d'un mot de passe). Lorsque le critère est défini par plusieurs conditions d'accès de natures différentes, le critère est dit composite.

Le module cryptographique sécurisé construit en 120 un jeton d'accès *tk* agrégeant les conditions d'accès, de sorte qu'il est possible à partir de ce jeton de régénérer les conditions d'accès et de vérifier si elles sont bien satisfaites. Ce jeton matérialise l'engagement du fournisseur de service SP ou du module HSM à respecter le critère d'accès, à l'égard de l'utilisateur.

Le module HSM, qui dispose lui-même de son cryptosystème asymétrique, signe le jeton *tk* avec sa clé privée et transmet le jeton d'accès ainsi signé, (*tk*)$_{HSM}$ , d'une part, à l'opérateur de contrôle d'accès, SO, et d'autre part, au terminal de l'utilisateur, UE.

Par ailleurs, le module HSM génère en 125 un flux de clé *ks$_i$*, permettant d'effectuer un chiffrement par flot (*stream cipher*). On rappelle qu'un chiffrement par flot est un chiffrement lequel le message à chiffrer est simplement additionné à une séquence de bits engendrée à partir d'une clé symétrique et d'un vecteur d'initialisation,*IV$_i$*. La clé symétrique peut être prise égale au jeton d'accès.

Le flux de clé pourra est généré au moyen d'une fonction pseudo-aléatoire ou PRF (*Pseudo Random Function*)*,* par exemple au moyen d'une primitive de chiffrement connue de l'homme du métier telle que AES-CTR (*Advanced Encryption Standard in Counter Mode*)*,* Grain, Trivium, etc.

Quel que soit l'algorithme de chiffrement par flot retenu, le flux de clé, *ks$_i$* est ensuite signé par la clé privée du module HSM puis chiffré au moyen de la clé publique de UE, *pk*. Le flux de clé ainsi signé et chiffré, [(*ks$_i$*)$_{HSM}$]$_{pk}$, est fourni au terminal de l'utilisateur, UE.

Après avoir déchiffré [(*ks$_i$*)$_{HSM}$]$_{pk}$ et vérifié, grâce à la signature, que le flux de clé et le jeton d'accès provenaient bien du module HSM, le terminal UE effectue un chiffrement par flot de la référence d'authentification, *tp,* de l'utilisateur. Le chiffrement est réalisé en 115 au moyen d'une simple opération XOR bit à bit, soit *tp* ⊕ *ks$_i$*. Le flux *ks$_i$* peut être considéré comme un masque jetable ou OTP (*One-Time Pad*) car il ne sert qu'une fois pour masquer la référence d'authentification. La référence d'authentification ainsi chiffrée (ou masquée) par l'utilisateur est transmis en 117 à l'unité de chiffrement homomorphe, ES.

L'unité ES effectue en 140 un chiffrement totalement homomorphe ou FHE (*Full Homomorphic Encryption*) de la référence d'authentification ainsi masquée. On rappelle qu'un chiffrement homomorphe FHE permet d'effectuer des opérations (en pratique des opérations arithmétiques d'addition et de multiplication) sur des données sans jamais les dévoiler. Plus précisément, un chiffrement totalement homomorphe FHE est un chiffrement à clé asymétrique $Enc_{FHE}$ (de clé publique $pk_{FHE}$) vérifiant les propriétés suivantes :

$$Enc_{FHE}: \Omega \rightarrow \Gamma$$

[Math. 1]

$$Dec_{FHE}[Enc_{FHE}(a) \oplus Enc_{FHE}(b)] = a + b \qquad (1\text{-}1)$$

[Math. 2]

$$Dec_{FHE}[Enc_{FHE}(a) \otimes Enc_{FHE}(b)] = a \times b \qquad (1\text{-}2)$$

où $\Omega$ est l'espace des messages clairs (dit plus simplement espace des clairs) et $\Gamma$ est l'espace des messages chiffrés (dit plus simplement espace des chiffrés), $+,x$ respectivement une opération additive et une opération multiplicative dans l'espace des clairs conférant à $\Omega$ une structure d'anneau, $\oplus,\otimes$ respectivement une opération d'addition interne et une opération de multiplication interne dans l'espace des chiffrés conférant à $\Gamma$ une structure d'anneau. On comprend ainsi que l'application de $(\Omega, +)$ dans $(\Gamma,\oplus)$ est un homomorphisme d'anneaux. $Dec_{FHE}$ est la fonction de déchiffrement correspondant à $Enc_{FHE}$ (où $sk_{FHE}$ est la clé secrète de l'utilisateur). Dans la suite, pour des raisons de cohérence, nous noterons plus simplement le chiffré homomorphe de $a$ : $[a]_{FHE} = Enc_{FHE}(a)$.

On peut également définir une opération d'addition externe de $\Omega \times \Gamma$ dans $\Gamma$, notée $\oplus_{ext}$, au moyen de :
[Math. 3]

$$a \oplus_{ext} [b]_{FHE} = [a]_{FHE} \oplus [b]_{FHE} \qquad (2)$$

auquel cas :
[Math. 4]

$$Dec_{FHE}[a \oplus_{ext} [b]_{FHE}] = a + b \qquad (3)$$

Le chiffré homomorphe de la référence d'authentification masquée, soit $[tp \oplus ks_i]_{FHE}$, est transmis au serveur distant SV qui le stocke en 150 dans la base de données DB, le cas échéant en relation avec un code fourni par l'utilisateur. Ce code peut être obtenu par hachage d'un identifiant de l'utilisateur avec le contenu d'un compteur, ledit compteur étant incrémenté à chaque fois que l'utilisateur s'enregistre auprès du fournisseur de service.

La base de données DB stocke par conséquent de manière confidentielle des références d'authentification, telles que des références biométriques d'une population utilisateurs, doublement chiffrées : la première couche de chiffrement est celle du chiffrement par flot ou masquage avec une clé issue du critère d'accès et la seconde couche de chiffrement est celle du chiffrement totalement homomorphe. On comprend ainsi que, quand bien même le serveur disposerait de la clé privée $sk_{FHE}$, il ne pourrait accéder aux références d'authentification des utilisateurs.

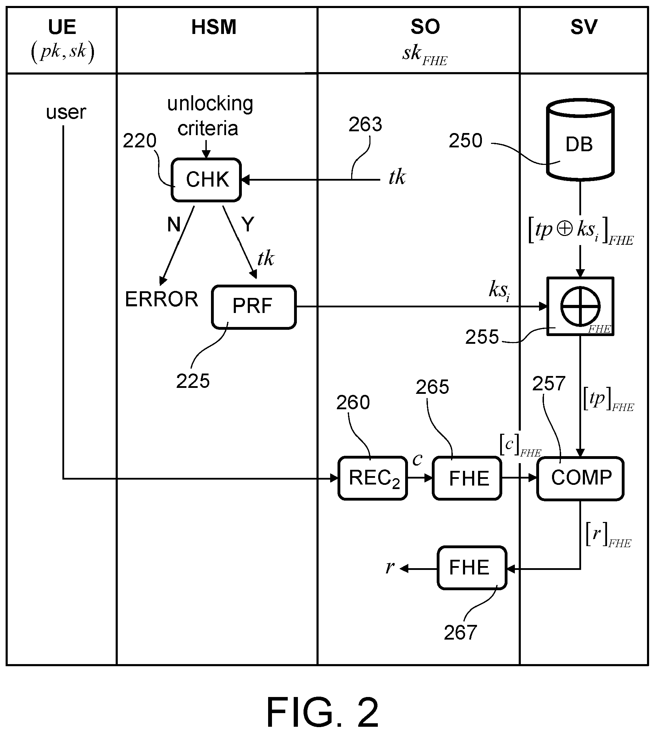

La Fig. 2 représente de manière schématique une phase de vérification d'une méthode de contrôle d'accès à authentification conditionnée, selon un premier mode de réalisation de l'invention.

Dans cette phase, l'utilisateur se présente auprès de l'opérateur de contrôle d'accès SO.

Ce dernier obtient en 260 une caractéristique d'authentification de l'utilisateur. Par exemple, il acquiert, grâce à son lecteur biométrique REC$_2$, une caractéristique biométrique de l'utilisateur. Cette caractéristique d'authentification (ou challenge) c est chiffrée par l'opérateur SO au moyen de la clé publique de chiffrement totalement homomorphe $pk_{PHE}$, en 265, puis transmise, sous la forme $[c]_{FHE}$, au serveur distant, SV.

Selon une première variante, l'utilisateur transmet son jeton d'accès signé, $(tk)_{HSM}$, à l'opérateur de contrôle d'accès, le cas échéant après l'avoir lui-même signé. Dans ce cas l'opérateur vérifie la provenance du jeton et le transmet en 263 au module HSM.

Selon une seconde variante, l'opérateur de contrôle d'accès fournit un identifiant et l'opérateur de contrôle d'accès recherche le jeton d'accès signé correspondant.

Selon une troisième variante, l'opérateur de contrôle d'accès dispose du jeton d'accès signé de manière implicite, par exemple parce qu'il correspond à une tranche horaire ou au lieu où il se trouve.

Bien entendu, différentes combinaisons de ces variantes pourront être envisagées par l'homme du métier sans sortir du cadre de la présente invention.

Dans tous les cas, l'opérateur SO transmet le jeton d'accès signé au module HSM, et ce dernier vérifie en 220 si le critère d'accès correspondant est vérifié. Dans la négative, le module HSM renvoie un message d'erreur et l'accès est refusé. En revanche, si le critère d'accès est vérifié, le module HSM génère à nouveau en 225 le masque jetable $s_i$, à l'aide la fonction pseudo-aléatoire PRF, à partir du jeton d'accès $tk$, et le transmet au serveur SV.

Le serveur SV retrouve en 250 dans la base de données, à partir du code ou de l'identifiant de l'utilisateur, le chiffré homomorphe de la référence d'authentification masquée, $[tp \oplus ks_i]_{FHE}$. Le serveur effectue en 255 une opération d'addition externe entre le chiffré homomorphe de la référence d'authentification masquée et le flux de clé reçu du module HSM, autrement dit calcule $ks_i \oplus_{ext} [tp \oplus ks_i]_{FHE} = [tp]_{FHE}$, ce qui permet d'enlever le masque dans le domaine homomorphe.

A ce stade, le serveur SV dispose par conséquent, d'une part, de la référence d'authentification chiffrée en homomorphe, $[tp]_{FHE}$, fourni par l'utilisateur lors de l'enregistrement et, d'autre part, de la caractéristique d'authentification également chiffrée en homomorphe $[c]_{FHE}$, fournie par l'opérateur lors du contrôle d'accès.

Le serveur peut alors comparer en 257 la caractéristique d'authentification à la référence d'authentification, c'est à dire déterminer dans le domaine homomorphe si la caractéristique d'authentification c et la référence d'authentification *tp* sont équivalentes, c'est-à-dire correspondent bien au même utilisateur. Dans certains cas simples, la relation d'équivalence peut être une simple identité. Dans la plupart des cas cependant, la caractéristique d'authentification différera de la référence. Par exemple, la caractéristique biométrique d'un utilisateur peut différer de sa référence biométrique. Toutefois elles seront considérées comme équivalentes si elles appartiennent à une même intersection de classes d'équivalence, autrement dit s'il y a identité des classes d'équivalence dans lesquelles la caractéristique et la référence biométriques sont classées. L'opération de classification peut ainsi être réalisée dans le domaine homomorphe, comme décrit par exemple dans le brevet FR-B-3095537 au nom de la présente Demanderesse.

Le résultat de la comparaison est fourni à l'opérateur de contrôle d'accès, SO, sous forme chiffrée dans le domaine homomorphe, $[r]_{FHE}$, où r peut pendre par exemple la valeur binaire « 1 » ou « 0 » selon qu'une équivalence est détectée ou non. On notera qu'il est impossible de distinguer une valeur chiffrée $[0]_{FHE}$ d'une valeur chiffrée $[1]_{FHE}$ étant donné qu'il existe un très grand nombre de telles valeurs tant pour l'une que pour l'autre.

L'opérateur de contrôle d'accès, SO, déchiffre en 267 le résultat de la comparaison au moyen de la clé privée $sk_{FHE}$ et en déduit si l'accès à la ressource doit être accordé ou non à l'utilisateur.

L'homme du métier comprendra que le masque généré par le module HSM rend inopérante toute collusion entre l'opérateur de contrôle d'accès SO et le serveur SV de la base de données. En effet, tant que le masque est présent, l'opérateur de contrôle d'accès et le serveur ne peuvent agir de concert pour accéder à la référence d'authentification (ex. la référence biométrique) de l'utilisateur (ce qui permettrait d'usurper son identité). En revanche, lorsque le masque est éliminé, une collusion entre l'opérateur de contrôle d'accès et le serveur permet de récupérer la référence d'authentification. Ainsi, lorsque le critère d'accès est composite, la vulnérabilité des données sensible est limitée à une fenêtre spatio-temporelle réduite. L'hypothèse classique (mais peu réaliste en pratique) d'un comportement « semi-honnête » des entités intervenant dans la méthode de contrôle d'accès, selon laquelle les entités se conformeraient au protocole mais seraient curieuses d'accéder aux données protégées n'est plus requise. Plus précisément, il suffit désormais que cette hypothèse soit satisfaite pendant la fenêtre d'accès.

Le premier mode de réalisation de la méthode de contrôle d'accès ne fait appel qu'à un seul masque généré par un module HSM, y compris lorsque le critère d'accès est composite. En revanche, selon un second mode de réalisation, on recourt à une pluralité de modules cryptographiques non nécessairement sécurisés, dits HM, chaque module HM générant un masque partiel à partir d'un critère d'accès élémentaire. Plus précisément, le critère d'accès n'est satisfait que si chacun des critères élémentaires est satisfait. Par exemple, dans le cas d'un critère d'accès spatio-temporel, un premier critère partiel peut être associé à une condition temporelle et un second critère partiel peut être associé à une condition géographique. Selon une variante, les critères partiels peuvent être redondants voire identiques. Dans ce cas, il ne se s'agit pas tant de décomposer un critère d'accès composite en critères élémentaires mais plutôt d'améliorer la sécurité du contrôle d'accès en générant des jetons d'accès indépendants.

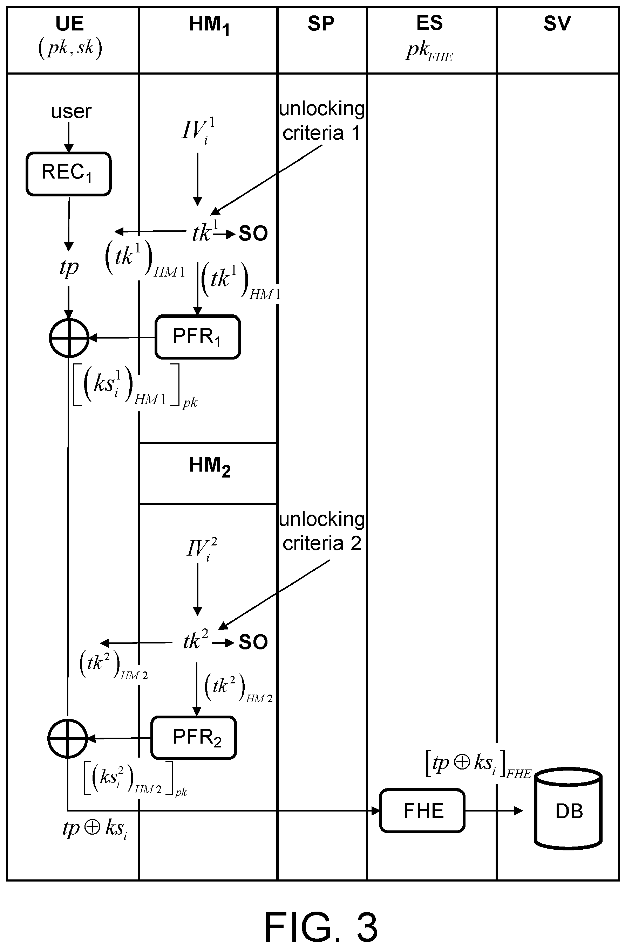

La Fig. 3 représente de manière schématique une phase d'enregistrement d'une méthode de contrôle d'accès à authentification masquée selon un second mode de réalisation de l'invention.

A la différence du premier mode de réalisation, la méthode de contrôle d'accès fait intervenir ici *N* > 1 modules HM indépendants. Le cas particulier représenté en Fig. 3 correspond à *N* = 2 mais l'homme du métier comprendra que la méthode se généralise sans difficulté à une pluralité Nquelconque.

Le premier module cryptographique, HM1, construit en 321 un premier jeton d'accès $tk^1$ correspondant à un premier critère d'accès élémentaire transmis par le fournisseur de service SP, signe le jeton $tk^1$ avec sa clé privée et transmet le jeton d'accès ainsi signé, $(tk^1)_{HM1}$, d'une part, à l'opérateur de contrôle d'accès, SO, et d'autre part, au terminal de l'utilisateur, UE. De manière similaire, le second module cryptographique, HM2, construit en 322 un second jeton d'accès $tk^2$ correspondant à un second critère d'accès élémentaire transmis par le fournisseur de service SP, signe le jeton $tk^2$ avec sa clé privée et transmet le jeton d'accès ainsi signé, $(tk^2)_{HM2}$, d'une part, à l'opérateur de contrôle d'accès, SO, et d'autre part, au terminal de l'utilisateur, UE.

Le module HM1 (resp. HM2) génère un premier flux de clé *ksi* (resp. un second flux de clé $ks_i^2$) à partir d'un premier (un second) vecteur d'initialisation, $IV_i^1$ (resp. $IV_i^2$) et d'une première (seconde) clé symétrique égale au premier (second) jeton d'accès. Le premier (second) flux de clé pourra est généré au moyen d'une première (seconde) fonction pseudo-aléatoire PRF1 (PRF2).

Le module HM1 signe le premier flux de clé, $ks_i^1$, puis le chiffre au moyen de la clé publique de UE, *pk*. De manière similaire, le module HM2 signe le second flux de clé, $ks_i^2$, puis le chiffre au moyen de la clé publique de UE, *pk*.

Les flux de clé ainsi signés et chiffrés, $[(ks_i^1)_{HM1}]_{pk}$ , $[(ks_i^2)_{HM2}]_{pk}$ , sont fournis au terminal de l'utilisateur, UE, qui les déchiffre à l'aide de sa clé privée *sk* et vérifie leur provenance à l'aide des signatures.

Le premier (second) flux de clé jour le rôle de premier (second) masque partiel. Les premier et second masques partiels sont ajoutés à la référence d'authentification de l'utilisateur, soit $tp \oplus ks_i^1 \oplus ks_i^2 = tp \oplus ks_i$ pour fournir une référence d'authentification masquée avec $ks_i = ks_i^1 \oplus ks_i^2$ .

Comme dans le premier mode de réalisation, la référence d'authentification ainsi masquée est ensuite transmise à l'entité de chiffrement homomorphe, qui le chiffre au moyen de sa clé publique homomorphe avant de le transmettre au serveur SV.

On remarquera dans ce second mode de réalisation que la robustesse du chiffrement par flot n'est pas assurée ici par un module cryptographique sécurisé unique mais par le fait que le flux de clé $ks_i$est distribué sur une pluralité de modules indépendants et qu'il est difficile d'attaquer simultanément tous ces modules.

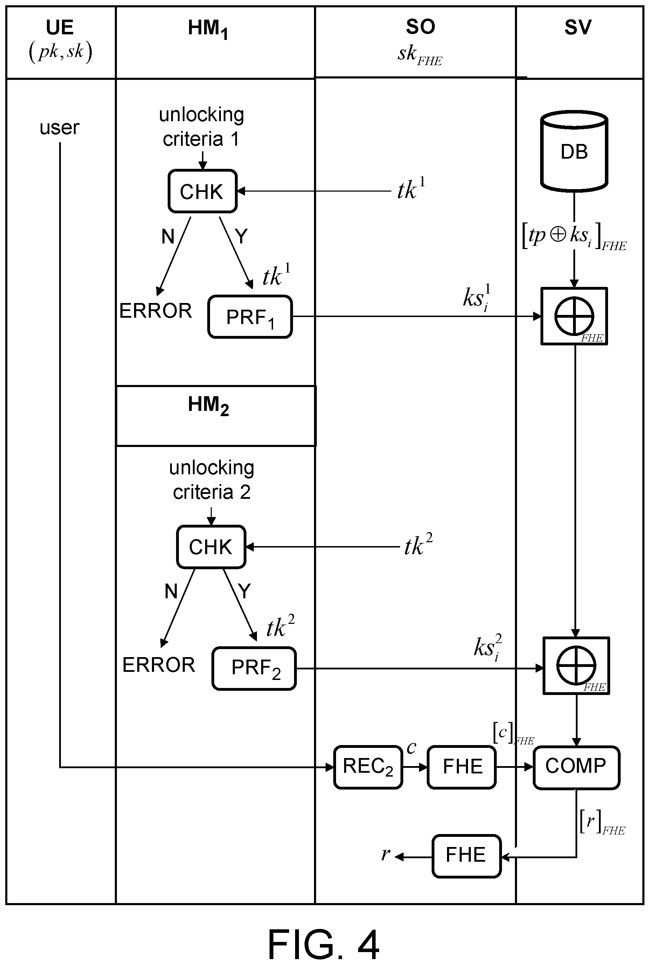

La Fig. 4 représente de manière schématique une phase de vérification d'une méthode de contrôle d'accès à authentification conditionnée selon un second mode de réalisation de l'invention.

Dans cette seconde phase, comme dans le premier mode de réalisation, l'opérateur de contrôle d'accès obtient grâce à son dispositif d'authentification (ici le lecteur biométrique $REC_2$) une caractéristique d'authentification de l'utilisateur puis le chiffre en homomorphe avant de le transmettre au serveur distant. Le cas échéant utilisateur fournit également à l'opérateur ses jetons d'accès signés $(tk^1)_{HM1}$ et $(tk^2)_{HM2}$ après les avoir lui-même signés avec sa clé privée. Les variantes envisagées pour le premier mode de réalisation s'appliquent ici également.

Après avoir vérifié la provenance des jetons d'accès, l'opérateur de service d'accès transmet au module HM1 le premier jeton d'accès $tk^1$ et au module HM2 le second jeton d'accès $tk^2$.

Le module HM1 vérifie si le premier critère d'accès élémentaire est satisfait. Si ce n'est pas le cas, celui renvoie un message d'erreur et l'accès est refusé. En revanche, si le premier critère d'accès élémentaire est vérifié, le module HM1 génère à nouveau le premier masque partiel *ksi* et le transmet au serveur SV.

Le module HM2 procède de même à l'égard du second critère d'accès élémentaire. Si celui-ci est satisfait, il génère à nouveau le second masque partiel $ks_i^2$ et le transmet au serveur SV.

Le serveur SV retrouve dans la base de données, à partir du code de l'utilisateur ou de son identifiant, le chiffré homomorphe de la référence d'authentification masquée, $[tp \oplus ks_i]_{FHE}$. Il effectue une opération d'addition externe entre le chiffré homomorphe de la référence d'authentification avec le premier flux de clé reçu du module HM1, puis avec le second flux de clé reçu du module HM2, ce qui permet d'enlever le masque dans le domaine homomorphe.

Comme dans le premier mode de réalisation, le serveur SV effectue une comparaison entre la caractéristique c d'authentification et la référence d'authentification *tp* de l'utilisateur dans le domaine homomorphe. Le résultat de la comparaison, chiffré en homomorphe, est transmis à l'opérateur d'accès qui le déchiffre à l'aide de la clé $sk_{FHE}$. Il accorde ou refuse à l'utilisateur l'accès à la ressource en fonction du résultat de comparaison ainsi déchiffré.

**Revendications**

1. Méthode de contrôle d'accès d'un utilisateur à une ressource physique ou logique, ledit utilisateur étant équipé d'un terminal (UE) muni d'un premier dispositif d'authentification ($REC_1$), ladite méthode de contrôle d'accès comprenant une phase d'enregistrement auprès d'un fournisseur de service (SP) et une phase de vérification auprès d'un opérateur de contrôle d'accès, ladite méthode étant **caractérisée en ce que**, dans la première phase :

   - un module cryptographique sécurisé (HSM) génère un jeton d'accès à partir d'un critère d'accès défini par le fournisseur de service puis génère un flux de clé ($ks_i$) au moyen d'un chiffrement par flot, à partir du jeton d'accès et d'un vecteur d'initialisation ($IV_i$), ledit flux de clé étant transmis au terminal ;
   - le terminal obtient une référence d'authentification *(tp)* de l'utilisateur au moyen du premier dispositif d'authentification, masque cette référence d'authentification au moyen du flux de clé et la transmet à une unité de chiffrement homomorphe, pour obtenir une référence d'authentification masquée et chiffrée ($[tp \oplus ks_i]_{FHE}$) au moyen d'une clé publique d'un cryptosystème homomorphe, la référence d'authentification masquée et chiffrée étant transmise à un serveur distant (SV) pour être stockée dans une base de données (DB) ;

   et que, dans la seconde phase :

- l'opérateur de contrôle d'accès transmet le jeton d'accès au dispositif cryptographique sécurisé, celui-ci générant à nouveau le flux de clé si le critère d'accès est satisfait et le transmettant alors au serveur distant ;
- l'opérateur de contrôle d'accès obtient une caractéristique d'authentification (c) de l'utilisateur au moyen d'un second dispositif d'authentification (REC$_2$), chiffre cette caractéristique d'authentification au moyen de la clé publique dudit cryptosystème homomorphe et transmet au serveur distant la caractéristique d'authentification ainsi chiffrée ($[c]_{FHE}$);
- le serveur distant somme la référence d'authentification chiffrée de l'utilisateur avec le flux de clé de manière à obtenir la référence d'authentification de l'utilisateur chiffrée en homomorphe ;
- le serveur distant effectue une comparaison de la caractéristique d'authentification et de la référence d'authentification dans le domaine homomorphe et transmet à l'opérateur de contrôle d'accès le résultat de la comparaison obtenu dans le domaine homomorphe ($[r]_{FHE}$);
- l'opérateur de contrôle d'accès déchiffre le résultat de la comparaison au moyen de la clé privée du cryptosytème homomorphe et accorde ou refuse l'accès à l'utilisateur en fonction du résultat ainsi déchiffré (r) .

2. Méthode de contrôle d'accès selon la revendication 1, **caractérisée en ce que** le jeton d'accès est obtenu en agrégeant une pluralité de conditions d'accès définies par le fournisseur de service.

3. Méthode de contrôle d'accès selon la revendication 2, **caractérisée en ce que** la pluralité de conditions d'accès comprend au moins une condition d'accès temporelle et une condition d'accès spatiale.

4. Méthode de contrôle d'accès selon l'une des revendications précédentes, **caractérisée en ce que** le jeton d'accès est signé par le dispositif cryptographique sécurisé avant d'être transmis au terminal, ce dernier en vérifiant la provenance au moyen de la signature.

5. Méthode de contrôle d'accès selon l'une des revendications précédentes, **caractérisée en ce que** le vecteur d'initialisation est incrémenté à chaque nouvelle phase d'enregistrement de l'utilisateur.

6. Méthode de contrôle d'accès selon l'une des revendications précédentes, **caractérisée en ce que** le flux de clé généré par le dispositif cryptographique sécurisé est signé par le dispositif cryptographique sécurisé puis chiffré au moyen de la clé publique d'un cryptosystème de l'utilisateur, le terminal déchiffrant le flux de clé au moyen de la clé privée de ce cryptosystème et vérifiant la provenance du flux de clé au moyen de la signature.

7. Méthode de contrôle d'accès selon l'une des revendications précédentes, **caractérisée en ce que** le terminal masque le premier modèle biométrique avec le flux de clé au moyen d'une opération XOR.

8. Méthode de contrôle d'accès selon l'une des revendications précédentes, **caractérisée en ce que** les premier et second dispositif d'authentification sont des lecteurs biométriques du même type, la référence d'authentification étant une référence biométrique et la caractéristique d'authentification étant une caractéristique biométrique.

9. Méthode de contrôle d'accès selon la revendication 8, **caractérisée en ce que** la comparaison entre la caractéristique biométrique et la référence biométrique est basée sur la classification de cette caractéristique et de cette référence dans une pluralité de classes, la comparaison étant concluante si les classes dans lesquelles elles sont classées sont identiques.

10. Méthode de contrôle d'accès d'un utilisateur à une ressource physique ou logique, ledit utilisateur étant équipé d'un terminal (UE) muni d'un premier dispositif d'authentification (REC$_1$), ladite méthode de contrôle d'accès comprenant une phase d'enregistrement auprès d'un fournisseur de service (SP) et une phase de vérification auprès d'un opérateur de contrôle d'accès, ladite méthode étant **caractérisée en ce que**, dans la première phase :

- une pluralité de modules cryptographiques (HM$_1$, HM$_2$), chaque module cryptographique générant un jeton d'accès à partir d'un critère d'accès élémentaire défini par le fournisseur de service puis générant un flux de clé ($ks_i^1, ks_i^2$) correspondant au moyen d'un chiffrement par flot, à partir du jeton d'accès associé au critère d'accès élémentaire et d'un vecteur d'initialisation ($IV_i^1, IV_i^2$), ledit flux de clé étant transmis au terminal ;
- le terminal obtient une référence d'authentification (tp) de l'utilisateur au moyen du premier dispositif d'authentification, masque cette référence d'authentification au moyen des flux de clé, transmet la référence d'authentification ainsi masquée à une unité de chiffrement homomorphe, pour obtenir une référence d'authentification masquée et chiffrée ($[tp \oplus ks_i]_{FHE}$) au moyen d'une clé publique d'un cryptosystème homomorphe, la référence d'authentification masquée et chiffrée étant transmise à un serveur distant (SV) pour être stocké dans une base de données (DB) ;

et que, dans la seconde phase :

- l'opérateur de contrôle d'accès transmet les jetons d'accès aux modules cryptographiques qui les ont générés, chaque opérateur générant à nouveau le flux de clé si le critère d'accès élémentaire associé est satisfait et le transmettant alors au serveur distant ;
- l'opérateur de contrôle d'accès obtient une caractéristique d'authentification ($c$) de l'utilisateur au moyen d'un second dispositif d'authentification (REC$_2$), chiffre la caractéristique d'authentification au moyen de la clé publique dudit cryptosystème homomorphe et transmet au serveur distant la caractéristique d'authentification ainsi chiffrée ($[c]_{FHE}$);
- le serveur distant somme successivement la référence d'authentification masquée et chiffrée de l'utilisateur avec les flux de clé de ladite pluralité de manière à obtenir la référence d'authentification de l'utilisateur chiffrée en homomorphe ;
- le serveur distant effectue une comparaison de la caractéristique d'authentification et de la référence d'authentification dans le domaine homomorphe et transmet à l'opérateur de contrôle d'accès le résultat de la comparaison obtenu dans le domaine homomorphe ($[r]_{FHE}$);
- l'opérateur de contrôle d'accès déchiffre le résultat de la comparaison au moyen de la clé privée du cryptosystème homomorphe et accorde ou refuse l'accès à l'utilisateur en fonction du résultat ainsi déchiffré ($r$) .

| UE $(pk, sk)$ | HSM | SP | ES $pk_{FHE}$ | SV |
|---|---|---|---|---|

user

$IV_i$

120

unlocking criteria

REC$_1$

110

130

$tk \rightarrow$ SO

$(tk)_{HSM}$  $(tk)_{HSM}$

$tp$

125

PRF

$\left[(ks_i)_{HSM}\right]_{pk}$

115

140

150

FHE

DB

$tp \oplus ks_i$

$[tp \oplus ks_i]_{FHE}$

# FIG. 1

| UE $(pk, sk)$ | HSM | SO $sk_{FHE}$ | SV |
|---|---|---|---|

FIG. 2

FIG. 3

| UE $(pk, sk)$ | HM$_1$ | SO $sk_{FHE}$ | SV |
|---|---|---|---|

user

unlocking criteria 1

CHK $\xleftarrow{\hspace{1cm}} tk^1$

DB

$[tp \oplus ks_i]_{FHE}$

N / Y

$tk^1$

ERROR    PRF$_1$ $\xrightarrow{\hspace{2cm} ks_i^1}$ $\bigoplus_{FHE}$

HM$_2$

unlocking criteria 2

CHK $\xleftarrow{\hspace{1cm}} tk^2$

N / Y

$tk^2$

ERROR    PRF$_2$ $\xrightarrow{\hspace{2cm} ks_i^2}$ $\bigoplus_{FHE}$

REC$_2$ $\xrightarrow{c}$ FHE $\xrightarrow{[c]_{FHE}}$ COMP

$[r]_{FHE}$

$r \xleftarrow{} $ FHE

# FIG. 4

Europäisches
Patentamt

European
Patent Office

Office européen
des brevets

**RAPPORT DE RECHERCHE EUROPEENNE**

Numéro de la demande

**EP 23 19 4109**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 2021/367786 A1 (SHEETS JOHN F [US] ET AL) 25 novembre 2021 (2021-11-25) * alinéas [0002], [0035]; figure 5 * ----- | 1-10 | INV. H04L9/32 H04L9/00 |
| A | BENDOUKHA ADDA-AKRAM ET AL: "Revisiting Stream-Cipher-Based Homomorphic Transciphering in the TFHE Era", 15 juin 2022 (2022-06-15), 20220615, PAGE(S) 19 - 33, XP047624370, * section 2; figure 1 * ----- | 1-10 | |
| A | CARPOV SERGIU ET AL: "Practical Privacy-Preserving Medical Diagnosis Using Homomorphic Encryption", 2016 IEEE 9TH INTERNATIONAL CONFERENCE ON CLOUD COMPUTING (CLOUD), IEEE, 27 juin 2016 (2016-06-27), pages 593-599, XP033047954, DOI: 10.1109/CLOUD.2016.0084 * figure 3 * ----- | 1-10 | |
| A | SINGH KALPANA ET AL: "Practical personalized genomics in the encrypted domain", 2018 THIRD INTERNATIONAL CONFERENCE ON FOG AND MOBILE EDGE COMPUTING (FMEC), IEEE, 23 avril 2018 (2018-04-23), pages 139-146, XP033351568, DOI: 10.1109/FMEC.2018.8364056 * section IV * ----- | 1-10 | DOMAINES TECHNIQUES RECHERCHES (IPC) H04L |

Le présent rapport a été établi pour toutes les revendications

| Lieu de la recherche | Date d'achèvement de la recherche | Examinateur |
|---|---|---|
| Munich | 22 janvier 2024 | Billet, Olivier |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

........................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 23 19 4109

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

22-01-2024

| Document brevet cité au rapport de recherche | Date de publication | Membre(s) de la famille de brevet(s) | Date de publication |
|---|---|---|---|
| US 2021367786 A1 | 25-11-2021 | CN 111466097 A | 28-07-2020 |
| | | EP 3721583 A1 | 14-10-2020 |
| | | RU 2020122027 A | 10-01-2022 |
| | | SG 11202004415T A | 29-06-2020 |
| | | US 2021367786 A1 | 25-11-2021 |
| | | WO 2019112650 A1 | 13-06-2019 |

EPO FORM P0460

Pour tout renseignement concernant cette annexe : voir Journal Officiel de l'Office européen des brevets, No.12/82

## RÉFÉRENCES CITÉES DANS LA DESCRIPTION

**Documents brevets cités dans la description**

- FR 3095537 B

**Littérature non-brevet citée dans la description**

- **J. LIU et al.** How to build time-lock encryption. *Des. Codes Cryptogr.,* 2018, vol. 86, 2549-2586